# EUROPEAN PATENT APPLICATION

(11) **EP 4 597 409 A1**
(43) Date of publication of application: **06.08.2025**
(21) Application number: 23872732.5
(22) Date of filing: 10.07.2023
(51) Int. Cl.: G06Q 50/10, G06Q 50/26, G06Q 10/10, G08B 19/00, G08B 25/00, G05B 23/02, G01D 21/02

(54) **SMART PLATFORM FOR EXPLOSION-PROOF INSPECTION IN INDUSTRIAL SITE**

(30) Priority: 26.09.2022 KR 20220121436
(71) Applicant: FOEX Co., Ltd., Ulsan 44428 (KR)
(72) Inventor: KANG, Gyu Hong, Changwon-si Gyeongsangnam-do 51214 (KR); LEE, Sun Kwon, Changwon-si Gyeongsangnam-do 51674 (KR)
(74) Representative: Impuls legal PartG mbB
(86) International application number: PCT/KR2023/009724
(87) International publication number: WO 2024/071607

(57) **Abstract**

The present invention provides a smart platform for explosion-proof inspection for preventing, overall, the risk of equipment exploding, the smart platform comprising a terminal that can communicate wirelessly and input and output information from an explosion-proof inspection, and a smart system that communicates with the terminal and can process and transmit the information from the explosion-proof inspection, wherein the smart system includes: an interface unit that receives information from the explosion-proof inspection, which is input via the terminal; an output unit that processes the information input from the interface unit and outputs the processed information to the terminal; a database management unit in which information required to carry out the explosion-proof inspection is stored; a control unit for controlling the flow of data between the terminal and the smart system; a danger area setting unit that determines the rating and range of an explosion danger area; an installation design support unit for ensuring that equipment is installed on the basis of the equipment ID registered in the database management unit, the explosion danger area rating determined by the danger area setting unit, a gas group, and a temperature rating; an on-site installation support unit that determines suitability by comparing the result output from the installation design support unit and the information about the installed equipment; and an approval unit for permitting equipment installation or inspection.

## Description

### Technical Field

The present disclosure relates to a smart platform for explosion-proof inspection in industrial sites.

More specifically, it relates to a smart platform for explosion-proof inspection in industrial sites that can prevent safety accidents in advance through the prevention of information omission according to history management, inspection cycle management, and update by collecting data such as equipment information and information on specific locations prone to explosion risks, such as power generation facilities, gas, petrochemical, offshore plants, etc. and notifying of the risk in reports.

### Background Art

In general, nuclear power, gas, petrochemical, marine plants, etc. are industries that utilize facilities or build factories to produce products such as electricity, gas, petrochemicals, etc., that is, provide devices, factory facilities, or production facilities that supply raw materials or energy and make physical or chemical reactions to obtain energy and plant facilities are mostly classified as high-risk facilities because many important facilities are complicatedly crowded together in a large space.

Furthermore, since many of the plant facilities in Korea were built in the 1960s and 1970s and are outdated, it is an urgent step to make decisions on disposal, repair, and replacement of facilities. Therefore, continuous monitoring and management are required since most of the plant facilities are high-risk facilities that contain high-risk substances, and it is necessary to quickly inspect the location of plant facilities and respond to failures and damages as soon as possible.

In particular, preventive maintenance is to be performed on a regular basis for high-risk facilities such as nuclear power generation, gas, petrochemical, etc. and a quick response measure is required in case gas and chemicals leak since large-scale fires and explosions may be caused.

A substantial amount of measuring equipment that performs a monitoring function within these high-risk facilities is building a system in such a way that the system is mounted in a separate explosion-proof enclosure since a non-explosion-proof measuring and monitoring system cannot be used when installed close to pipes and facilities enough to affect high-risk facilities in case a fire or explosion due to an electrical defect or external shock in the measuring equipment happens, but competitiveness is weakened and space restrictions occur due to increased installation costs when installed in a separate explosion-proof enclosure.

In addition, it should always be reviewed and information should be updated when certain conditions change, such as a change in a specific location or equipment of a high-risk facility, a change in the amount of gas usage or the like, but it can be a cause of an explosion accident when such a work process is not performed and information is omitted or false information is recorded.

Accordingly, in order to prevent the above problems, a technology is required to collect correct information on high-risk facilities in order to prevent false information or accidental omissions and misjudgments by mistake by providing a safety inspection solution for explosion-proof inspection.

### Disclosure

### Technical Problem

The present disclosure is devised to solve the above problems, and the task to be solved in the present disclosure is to provide a smart platform for explosion-proof inspection in industrial sites that can prevent safety accidents in advance through prevention of information omission according to history management, inspection cycle management, and updates by collecting data such as equipment information and information on specific locations exposed to explosion risks, such as power generation facilities, gas, petrochemical, offshore plants, etc. and notifying of the same in reports.

In addition, another task to be solved in the present disclosure is to provide a smart platform for explosion-proof inspection in industrial sites that determines the level of the explosion-proof area and then outputs and notifies of the distance to the hazardous area by determining the level and range of the hazardous area of the explosion in a combustible gas and dust environment.

In addition, another task to be solved in the present disclosure is to provide a smart platform for explosion-proof inspection in industrial sites that determines the appropriateness of the equipment to be installed in the explosion-proof area by setting the explosion-proof level of the equipment to be installed in the explosion-proof area and by performing installation procedures while comparing to the installation regulations in the field.

### Technical Solution

In a smart platform for explosion-proof inspection in an industrial site according to the present disclosure in order to solve the above problems, provided is a smart platform for explosion-proof inspection in an industrial that is configured to include a terminal capable of wireless communication and capable of inputting and outputting information according to an explosion-proof inspection, and a smart system capable of processing and transmitting information according to the explosion-proof inspection in communication with the terminal, wherein the smart system includes an interface unit that receives information according to the explosion-proof inspection inputted through the terminal, an output unit that processes information inputted from the interface unit and outputs the same to the terminal, a database management unit that stores information necessary to perform the explosion-proof inspection, a controller that controls the flow of data between the terminal and the smart system, an inspection unit that enables inspection of the equipment to be performed, a hazard area setting unit that determines the level and range of the hazardous area of the explosion, an installation design support unit that enables installation of the equipment to be performed on the basis of the ID of the equipment registered in the database management unit, the level of hazardous area of the explosion determined in the hazard area setting unit, the gas group, and the temperature level, an on-site installation support unit that determines an appropriateness by comparing the results outputted from the installation design support unit with information on installed equipment, and an approval unit for an equipment installation or an inspection permission.

### Advantageous Effects

The present disclosure may have a remarkable effect in preventing safety accidents in advance through the prevention of information omission according to history management, inspection cycle management, and updates by collecting data such as equipment information and information on specific locations exposed to explosion risks, such as power generation facilities, gas, petrochemical, offshore plants, etc. and notifying of the same in reports.

In addition, the present disclosure may have a remarkable effect in specifying hazardous areas of explosion by determining the level of the explosion-proof area and then outputting and notifying of the distance to the hazardous area by determining the level and range of the hazardous area of the explosion in a combustible gas and dust environment.

In addition, the present disclosure may have a remarkable effect in determining the appropriateness of the equipment to be installed in the explosion-proof area by setting the explosion-proof level of the equipment to be installed in the explosion-proof area and by performing installation procedures while comparing to the installation regulations in the field.

### Description of Drawings

FIG. 1 is a configuration diagram showing a smart platform for explosion-proof inspection in industrial sites according to the present disclosure.
FIG. 2 is a view showing a configuration relationship of a smart system in a smart platform for explosion-proof inspection in industrial sites according to the present disclosure.
FIG. 3 is a configuration diagram showing an inspection unit in a smart platform for explosion-proof inspection in industrial sites according to the present disclosure.
FIG. 4 is a configuration diagram showing a sampling specifying module in a smart platform for explosion-proof inspection in industrial sites according to the present disclosure.
FIG. 5 is a table showing a safety level according to LOT size in a smart platform for explosion-proof inspection in industrial sites according to the present disclosure.
FIG. 6 is a view showing an example of mapping and displaying an inspection route in a smart platform for explosion-proof inspection in industrial sites according to the present disclosure.

### Description of Reference Numerals

100 : terminal 200 : smart system
10: interface unit 20: output unit
30 : database management unit 40 : controller
50 : inspection unit 51 : sampling specifying module
51a : equipment history management module 51b : LOT size determination module
51c : safety level setting module 51d : rejection criterion level setting module
51e : ignition risk calculation module 51f : diagnosis module
51g : inspection determination module 51h : inspection frequency setting module
52 : inspection route setting module 53 : location specifying module
54 : intensive management module
60 : hazard area setting unit 70 : installation design support unit
80: on-site installation support unit 90: approval unit

### Best Mode

The advantages and features of the exemplary embodiments of the present disclosure and methods of achieving them will become apparent with reference to the exemplary embodiments described below in detail with the accompanying drawings. However, the present disclosure may be not limited to the exemplary embodiments disclosed below, but may be implemented in various different forms, and only the present exemplary embodiments may be provided merely to make the present disclosure complete and to give those having ordinary skill in the art to which the present disclosure belongs a complete idea of the scope of the present disclosure, which is only defined by the scope of the claims. Throughout the specification, the same reference numerals refer to the same elements.

In describing the exemplary embodiments of the present disclosure, a detailed description thereof will be omitted when it is determined that a detailed description of a known function or configuration may unnecessarily obscure the gist of the present disclosure. In addition, terms or words used in this specification and claims are terms defined in consideration of their functions in an exemplary embodiment of the present disclosure, and should not be construed as limited to ordinary or dictionary meaning, and should be construed as meaning and concept consistent with the technical idea of the present disclosure on the basis of the principle that the inventor may appropriately define the concept of the term in the best way to describe his invention.

Therefore, since the exemplary embodiments described in this specification and the configurations shown in the drawings are only the most desirable exemplary embodiments of the present disclosure and do not represent the entire technical idea of the present disclosure, it should be understood that there may be various equivalents and variations that can replace them at the time of filing the present application.

Hereinafter, before explaining with reference to the drawings, it should be noted that the matters not necessary in revealing the gist of the present disclosure, that is, known configurations that can be easily added by a person skilled in the art will not be shown or described in detail.

First, before describing various exemplary embodiments of the present disclosure in detail with reference to the accompanying drawings, the directions of the components (e.g., "before", "after", "left", "right", "up", "down", "top", "bottom", "horizontal", "longitudinal", "front", "back", "one side", "other side", "inside", and "outside") described in the following detailed description or shown in the drawings may not simply indicate or mean that it should have a specific direction, and the description of this direction may be intended to facilitate explanation of the components with reference to the attached drawings.

The smart platform for explosion-proof inspection in industrial sites according to the present disclosure may relate to a smart platform for explosion-proof inspection in industrial sites that can prevent safety accidents in advance through the prevention of information omission according to history management, inspection cycle management, and updates by collecting data such as equipment information and information on specific locations exposed to explosion risks, such as power generation facilities, gas, petrochemical, offshore plants, etc. and notifying of the same in reports.

Hereinafter, the smart platform for explosion-proof inspection in industrial sites according to the present disclosure will be described in detail with reference to the accompanying drawings.

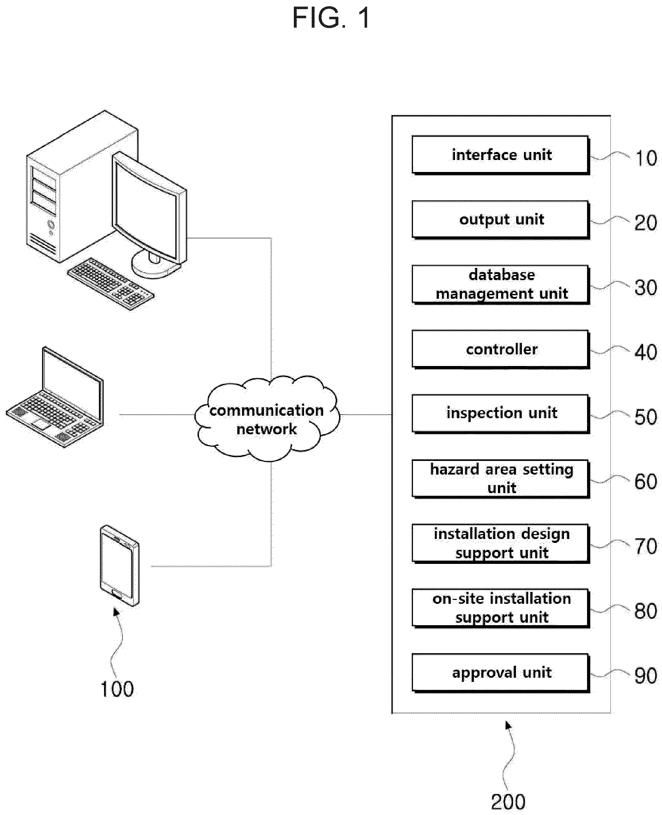

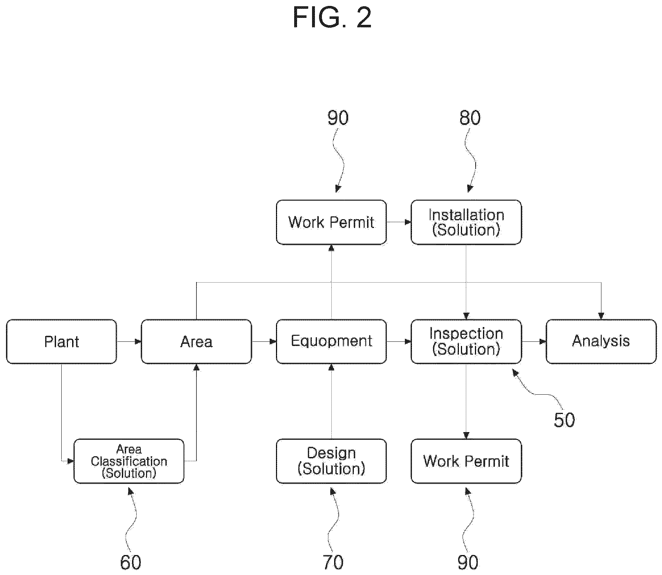

FIG. 1 is a configuration diagram showing a smart platform for explosion-proof inspection in industrial sites according to the present disclosure, and FIG. 2 is a view showing a configuration relationship of a smart system in a smart platform for explosion-proof inspection in industrial sites according to the present disclosure.

The smart platform for explosion-proof inspection in industrial sites according to the present disclosure may relate to a smart platform for explosion-proof inspection in industrial sites for maintenance and management of hazardous areas of the explosion, and may include a terminal 100 capable of wireless communication and a smart system 200, wherein safety accidents may be prevented in advance through the prevention of information omission according to the history management, inspection cycle management, and updates by enabling quick and easy inspection through sampling inspection rather than full inspection when inspecting equipment and notifying of the data collected through the terminal 100 in a report form, and further unnecessary inspection may be prevented by generating routes for inspections while utilizing information on a specific location and by notifying of the location where inspection is completed and the history of the equipment.

The terminal 100 may refer to a device that can be connected to a separate server through a wired/wireless communication network, and may be a laptop, smartphone, tablet, or separate terminal that can be carried by the user.

The terminal 100 may include a display for outputting various information, a touch or mechanical keyboard for input, and an application for operation, and may be configured to be provided with a battery for power supply, and to embed a smart system 200 to be described later or enable wireless communication with a separate smart system 200.

Furthermore, a speaker for recording and outputting voice, and a camera for recognizing and capturing images may be provided.

In this case, the terminal 100 may be provided with a reader to receive a state information of the specific equipment from an RFID tag.

For example, the information about equipment and an identification code may be stored together by identifying RFID tags attached to equipment.

The smart system 200 may be configured to send and receive information through wireless communication with the terminal 100, may be capable of processing and transmitting information according to the explosion-proof inspection by communicating with the terminal 100, and may include an interface unit 10, an output unit 20, a database management unit 30, a controller 40, an inspection unit 50, a hazard area setting unit 60, an installation design support unit 70, an on-site installation support unit 80, and an approval unit 90.

The smart system 200 may be configured in a separate server to enable wireless communication with the terminal 100 or may be configured to be provided in the terminal 100 itself.

For example, when the smart system 200 is configured to be embedded in the terminal 100, inputting data or outputting a report may be possible in the process of the user carrying the terminal 100 to a specific location and inspecting a specific equipment, or may be configured to store data in a separate server capable of wireless communication.

Furthermore, explaining the configuration relationship of the smart system 200 referring to FIG. 2, information may be transmitted to the terminal 100 through the hazard area setting unit 60, which will be described later, in order to enable a solution for transmitting information of an explosion-proof hazard area (place), information may be transmitted to the terminal 100 through the installation design support unit 70 and the on-site installation support unit 80 in order to enable a solution for selecting, designing, and installing explosion-proof equipment, an inspection may be performed for a specific location and equipment through the inspection unit 50, and in these processes, the permission of the approval unit 90 may be accompanied for work, thereby preventing not only the omission of data but also the occurrence of safety accidents by ensuring that various information is transmitted through reporting.

The interface unit 10 may allow various information such as routes, history about equipment, inspection reports, and the like to be inputted through the terminal 100.

The output unit 20 may perform a function of transmitting information to the user by allowing various information such as routes, history about equipment, inspection reports, and the like to be outputted through the terminal 100.

In this case, the output unit 20 may provide notification through various components such as vibration, an LED, a speaker, a display, and the like.

The database management unit 30 may store information necessary to perform an explosion-proof inspection, that is, store data such as information about a specific location such as a map of an explosion hazard area or a structure (space) of a building and information on a specific equipment such as a name, manufacturer, installation time, and replacement cycle on the equipment.

It may be desirable to update in real time the information stored in the database management unit 30, and to update and store the information inputted through the interface unit 10.

In this case, the terminal 100 may be configured to determine whether there is an input of information updated in real time.

For example, a change in a location of the terminal 100 through GPS on the basis of information about a specific location stored in the database management unit 30 may be detected, whether an inspection is performed at the location where the terminal 100 stayed for a certain period of time may be inferred, and then when determined that the inspection is performed, whether the contents of the inspection results are updated in real time through the interface unit 10 may be determined, thereby checking whether information updates are missed after the inspection.

That is, when the database management unit 30 is not updated in real time after an inspection is performed on a specific equipment at a specific location, the user may be notified through the output unit 20 assuming that the relevant information after the inspection is not updated after the inspection, thereby preventing the omission of information by updating the information.

Herein, inferring whether the inspection is performed at the location where the terminal 100 stayed for a certain period of time may refer to the time on learning through a deep learning algorithm.

In other words, GPS may detect the movement of the terminal 100 and the time that the terminal 100 stays at a specific location where a specific equipment is installed. At this time, when the time that the terminal 100 stays (the time it was stationary without moving) is longer than the minimum time required to inspect a specific equipment at a specific location, it may be inferred that the equipment is inspected.

That is, when the terminal 100 stays in a specific location for a longer period of time than the minimum time required to perform an inspection, whether a real-time update is performed may be determined assuming that the inspection is performed on the specific equipment, thereby avoiding the problem of not updating the inspection results.

The controller 40 may be intended to control the flow of data between the terminal 100 and the smart system 200 and performs a function of controlling the entire smart system 200.

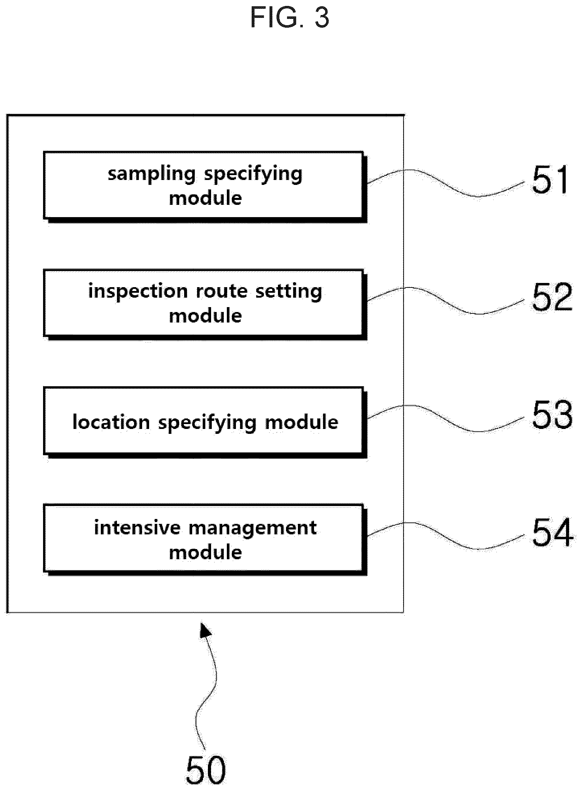

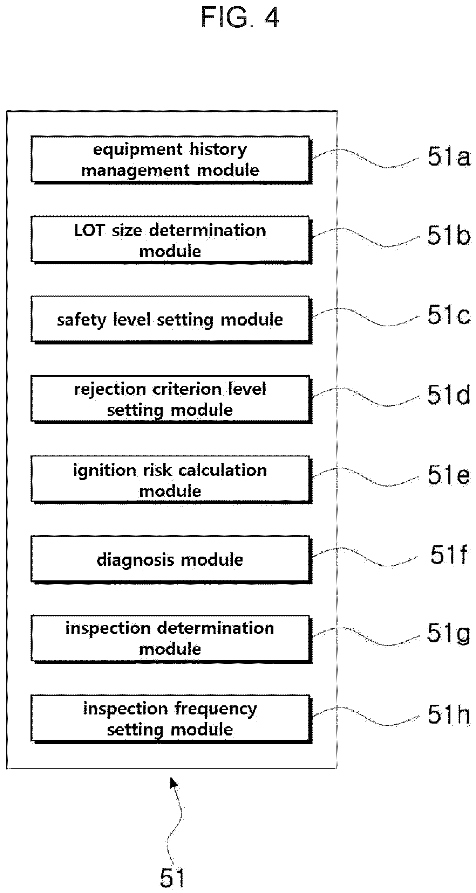

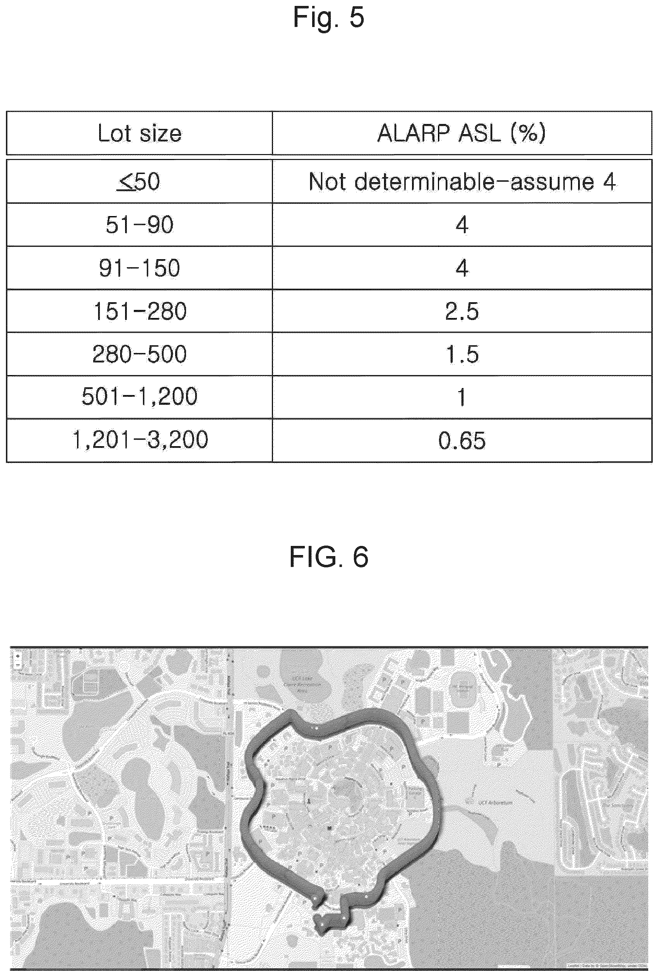

FIG. 3 is a configuration diagram showing an inspection unit in a smart platform for explosion-proof inspection in industrial sites according to the present disclosure, FIG. 4 is a configuration diagram showing a sampling specifying module in a smart platform for explosion-proof inspection in industrial sites according to the present disclosure, FIG. 5 is a table showing a safety level according to LOT size in a smart platform for explosion-proof inspection in industrial sites according to the present disclosure, and FIG. 6 is a view showing an example of mapping and displaying an inspection route in a smart platform for explosion-proof inspection in industrial sites according to the present disclosure.

The inspection unit 50 may perform a function of supporting inspection of specific areas and equipment, and may include a sampling specifying module 51, an inspection route setting module 52, a location specifying module 53, and an intensive management module 54.

The sampling specifying module 51 may enable a sample inspection of a specific equipment selected among all equipment to be performed, and the inspection cycle of the specific equipment may be checked through the sample inspection rather than a full inspection.

This may have the effects of preventing the problem of time delays when performing a full inspection of all equipment and of lowering the risk of safety accidents more quickly by allowing a sample inspection of a specific equipment with a higher risk potential to be performed first.

That is, the work time and costs according to the inspection may be reduced by replacing information on a full inspection of all equipment with the selected sample inspection of the specific equipment.

The sampling specifying module 51 may include an equipment history management module 51a, a LOT size determination module 51b, a safety level setting module 51c, a rejection criterion level setting module 51d, an ignition risk calculation module 51e, a diagnosis module 51f, an inspection determination module 51g, and an inspection frequency setting module 51h.

The equipment history management module 51a may set information of an equipment and a basic inspection cycle, and the basic inspection cycle may be set on the basis of the information of a short inspection cycle by comparing the information recorded on the nameplate of a specific equipment with the past inspection history information and the set safety range setting value.

The basic inspection cycle may be classified into three stages: Low, Medium, and High.

Herein, the inspection cycle of a specific equipment whose level of the basic inspection cycle corresponds to the Low level may be set to be inspected once every 6 months, the inspection cycle of the specific equipment corresponding to the Medium level may be set to be inspected once every 3 months, and the inspection cycle of the specific equipment corresponding to the High level may be set to be inspected once a month.

At this time, the basic inspection cycle may be changed so that the inspection cycle of a specific equipment is shortened in consideration of a location where the equipment is installed, the presence or absence of objects with a high risk of explosion in the location, aging of the equipment, information on the surrounding environment, and etc., but the maximum period set for a single inspection may not exceed two years.

The LOT size determination module 51b may perform a function of grouping the specific equipment having the same conditions across all equipment into a plurality of LOT sizes.

That is, when the total number and type of equipment are multiple, the specific equipment having the same conditions may be grouped and managed by LOT size, wherein conditions for the sample inspection may be met by performing an inspection for all equipment of the LOT size where the inspection cycle arrives or to which a specific equipment determined to be a risk factor belongs during sampling inspection, and further it is possible to prevent the problem that the inspection of equipment that should be inspected is omitted by inspecting all the specific equipment under the same conditions.

At this time, the conditions for determining the LOT size may be to analyze the commonality of specific elements that each equipment has and to determine the group bound by the commonality as one LOT size in consideration of a location where each of a plurality of equipment is installed, classification according to explosion-proof structure (EX Type of protection), environmental conditions, age of equipment, and type of equipment such as motor or lighting.

According to the design conditions, the equipment where the commonality of a plurality of equipment grouped by LOT size may exceed 60% compared to the difference may be grouped into one LOT size.

For example, when the commonality between equipment "A" and equipment "B" is analyzed on the basis of the above considerations and the ratio of commonality to a difference between equipment "A" and equipment "B" is approximately 7:3, equipment "A" and equipment "B" may be grouped into one LOT size determining that the commonality exceeds 60% compared to the difference.

As another example, when the ratio of commonality to a difference between equipment "C" and equipment "D" is about 5:5, the commonality to a difference may be 50%, so each of equipment "C" and equipment "D" may be classified into different LOT size.

The safety level setting module 51c may perform a function of determining a safety level (ASL: acceptance safety level) for each equipment of the LOT size grouped in the LOT size determination module 51b.

At this time, explaining with reference to FIG. 5, determining the safety level (ASL) for each equipment of the grouped LOT size may be to set the safety level corresponding to a numerical range of the grouped LOT size.

For example, when the LOT size is in the range of 51-90, the safety level of ALARP (as low as reasonably practicable) ASL may be set to 4.

As another example, when the LOT size is in the range equal to or less than 50, the safety level for ALARP (as low as reasonably practicable) ASL may be set to an estimated 4, in consideration of the LOT size in the 51-90 range, which is one stage higher.

This safety level may represent the relative magnitude of the hazard, and explaining in reference to FIG. 5, when the LOT size is in the range of 281-500, the safety level should not exceed 1.5. When the safety level exceeds 1.5, it may mean that the magnitude of the hazard is the greatest, and the location where the corresponding equipment is installed may be classified as an unacceptable area, that is, a hazardous area.

Since this is a case where an explosion is highly likely to occur, protective measures may be performed so that the safety level is sufficiently low by notifying the user through the terminal 100, implementing step-by-step measures to prepare for an explosion, and further removing the ignition source itself through cutting off the power supply to equipment causing an explosion, in order to prevent safety accidents or minimize the degree of accident risks.

Meanwhile, the safety level of each LOT size having different zones as shown in FIG. 5 may be set to an acceptable area (an unstable area).

Furthermore, the hazard level of the LOT size may be set on the basis of the safety level, and with reference to FIG. 5, a LOT size that exceeds the safety level may be classified as High, a LOT size included in the safety level that is less than or equal to the safety level and is greater than half of the safety level may be classified as Medium, and a LOT size included in the safety level that is less than or equal to half of the safety level may be classified as Low.

The rejection criterion level setting module 51d may perform a function of setting rejection criterion for equipment of each LOT size grouped in the LOT size determination module 51b.

Setting a rejection criterion may be to set a rejection criterion in consideration of the level (Low, Medium, High) according to the basic inspection cycle set by the equipment history management module 51a, the level (Low, Medium, High) according to the safety level set by the safety level setting module 51c, the level according to environmental factors, and the level according to the aging of the equipment.

Herein, the level according to environmental factors may be classified into three levels (Low, Medium, and High) in consideration of the likelihood of explosion around the equipment, and the level according to the aging of the equipment may be set to the Low level when the number of years of use is less than 5 years, the Medium level when the number of years of use is greater than 5 years and less than or equal to 20 years, and the High level when the number of years of use exceeds 20 years.

Accordingly, the rejection criterion level setting module 51d may multiply all values corresponding to each level set for the equipment, and then divide into three equal parts to set the rejection criterion level.

In this case, in the value corresponding to each level, the Low level may have a value of 0.5, the Medium level may have a value of 1.0, and the High level may have a value of 1.5.

The ignition risk calculation module 51e may perform a function of calculating a level of an ignition risk for equipment of each LOT size grouped in the LOT size determination module 51b.

The level of the ignition risk may be calculated in a way where the number of equipment determined to have a fault as a result of each equipment inspection on ignition risks is multiplied by the weight of the ignition risk and then the total is added up.

That is, the number of failed equipment may be multiplied by the weight of the ignition risk, and then the total may be added up.

Herein, the weight of 1.0 for the weight of the ignition risk may be multiplied in the case of a high ignition risk, the weight of 0.5 may be multiplied in the case of a medium ignition risk, and the weight of 0.25 may be multiplied in the case of a low ignition risk.

The diagnosis module 51f may perform a function of comparing and diagnosing the level of the ignition risk of the LOT size calculated in the ignition risk calculation module 51e and the rejection criterion value of the LOT size set in the rejection criterion level setting module 51d.

The inspection determination module 51g may provide a notification through the output unit 20 to enable a comparison, a sample inspection and a full inspection to be performed in the diagnosis module 51f.

At this time, when the level of ignition risk is greater than the rejection criterion value as a result of comparison in the diagnosis module 51f and the failure factors of multiple equipment grouped in one LOT size fall into the same category, the sample inspection may be performed for the remaining equipment excluding equipment having common failure factors among multiple equipment grouped by the LOT size.

This may reduce the time required to inspect all the multiple equipment by determining that all the equipment having the same failures or similar failures are failed when the cause of failure of some equipment among a plurality of equipment grouped by LOT size is determined to be the same and by not performing the inspection for the corresponding equipment, and further may improve the inspection efficiency by quickly switching to the inspection for other LOT sizes.

In addition, when the level of the ignition risk is greater than the rejection criterion value as a result of comparison in the diagnosis module 51f and the failure factors of multiple equipment grouped in one LOT size do not fall into the same category, a full inspection may be performed since failures may occur in equipment grouped not only in the corresponding LOT size but also in other LOT sizes.

In addition, the inspection determination module 51g may perform an additional inspection of a LOT size other than the LOT size in which the equipment having failure factors is grouped, when the level of the ignition risk is less than the rejection criterion value as a result of the comparison in the diagnosis module 51f.

In addition, the inspection frequency setting module 51h may perform a function of classifying equipment of the LOT size on which a sampling inspection or a full inspection is performed in the inspection determination module 51g into three stages according to the level of the ignition risk and setting an inspection cycle according to each stage.

At this time, the inspection frequency may be divided into three stages, so the low ignition risk may be set to perform the inspection once every 12 months, the medium ignition risk may be set to perform the inspection once every three months, and the high ignition risk may be set to perform the inspection once a week.

As such, the smart platform for explosion-proof inspection at industrial sites according to the present disclosure may replace a full inspection result with a sample inspection result by always performing a sample inspection rather than a full inspection when a specific condition is met in the inspection determination module 51g, thereby reducing not only the time required for the inspection but also the cost.

The inspection route setting module 52 may perform a function of generating a route for the inspection in consideration of location information and equipment information when performing an explosion-proof inspection, and outputting the same through the terminal 100.

The inspection route setting module 52 may perform a function of recommending an efficient route by determining location information and equipment information for each of a plurality of LOT sizes grouped in the LOT size determination module 51b, and a priority route for accessing a plurality of equipment belonging to each LOT size and by outputting the same to the terminal 100.

Herein, the location information may refer to the structure of the building, floors, mutual distances, information on routes that can be accessed, and the like, and the equipment information may refer to a plurality of equipment grouped within the LOT size determined by the LOT size determination module 51b, that is, the type of common equipment and the location according to the installation location.

Preferably, the location information and equipment information may be outputted through the terminal 100, and may include a unique identification information to be identified.

In the case of the location information, for example, each room, living room, or other compartmentalized space may be assigned a unique identification information utilizing characters such as alphabets or Arabic numerals and may be mapped and outputted along with the unique identification information through the interface unit 10 of the terminal 100.

In addition, the equipment information may include all information such as the history about the equipment, and the same product family grouped by the LOT size may be identified and outputted.

For example, the equipment grouped in the LOT size "A" cluster may be identified and outputted with the same color or same letter on the map using location information.

Accordingly, the inspection route setting module 52 may output a travelable route for the inspection on the map through the terminal 100, and may provide the user with an optimal customized route for performing the sample inspection by generating the priority route prioritizing the shortest distance between the terminal 100 and the location where the inspection equipment target is located, and by generating a route that sequentially guides the equipment grouped in the LOT size, that is, the same product family, in consideration of the shortest distance.

At this time, the inspection route setting module 52 may be configured to complete a 3D map from a video image photographed through a wearable camera when generating an optimal route.

Such a 3D map may be utilized to generate the shortest route and optimal route for the inspection of explosion-proof equipment in the plant and furthermore, provide an optimized inspection route by providing information such as whether the inspection was performed in the past or the time elapsed after the inspection was performed in the past.

For example, as shown in FIG. 6, the inspection route setting module 52 may be configured to map and display the inspection route through the terminal 100 by utilizing a video image photographed through a wearable camera.

Herein, the route shown on the map of FIG. 6 may be generated such that a plurality of points, including a starting point and an ending point, are marked on the map so that the inspection can be performed sequentially along the route, and the point at the location where the user visited, that is, the location visited by the user so that the inspection is performed, may be deleted from the map.

The location specifying module 53 may perform a function of distinguishing and determining a route on which an inspection is completed and a route on which an inspection is not performed through a video image photographed by a wearable camera that is integrated with or separate from the terminal 100.

First, it may be for minimizing revisiting the corresponding location and reducing wasted travel by identifying the route where the inspection is completed, and a notification may be automatically provided to the user through the output unit 20 when the user revisits the location where the inspection is completed while carrying the terminal 100.

Accordingly, performing unnecessary work may be minimized by notifying of whether the inspection of a specific location is completed even when the user is changed by rotation.

In addition, the information about the route and location where the inspection is not performed may be automatically notified through the output unit 20 by detecting the information that a route generated by the inspection route setting module 52 is not visited.

That is, when the inspection is not performed according to the set route after a route setting is completed in the inspection route setting module 52, the location specifying module 53 may be configured to determine it as a non-performing route and automatically notify of the same through the output unit 20.

Accordingly, it may be possible to prevent the problem of missing the inspection of the equipment and increase the efficiency of the equipment inspection by traveling along the optimal route according to the equipment inspection when inducing the user holding the terminal 100 to move along the optimal route.

Furthermore, when an inspection completion record of a LOT size in which specific equipment or a plurality of common equipment is grouped is input from the interface unit 10, whether the inspection of the LOT size in which the specific equipment or a plurality of common equipment is grouped is completed may be determined from a video image photographed through a wearable camera, and may be notified through the output unit 20.

According to design conditions, the location specifying module 53 may be configured to determine whether a safety accident such as a heavy object falling, a crane malfunction, or a fire may occur in the surrounding area while performing an inspection of an explosion-proof equipment through a wearable camera, and to generate a danger signal through the terminal 100.

This may ensure the user's safety by detecting and notifying of whether safety accidents occur in the surrounding area through a wearable camera in the process of the user performing the inspection along the optimal route generated in the inspection route setting module 52.

Accordingly, the user may perform the inspection along the optimal inspection route generated by the inspection route setting module 52, but when a danger signal is generated, the optimal inspection route may be modified or safety measures may be performed in order to prevent the occurrence of a user's safety accident.

The intensive management module 54 may perform a function of distinguishing between common items and special items that are provided in a plurality of equipment and then performing an inspection.

Herein, the common items may be common management items that are provided in all equipment, such as the tightness force of a bolt or the loss of a bolt that is provided in the specific equipment, and the special items may be special management items that are provided in only some equipment among all equipment, such as a motor or a battery.

At this time, distinguishing and managing the special items may enable detailed management of each configuration since even a single equipment is composed of various mechanical and control configurations, thereby minimizing the risk of explosion.

In addition, the intensive management module 54 may classify the equipment that does not require a power supply and therefore does not have a controller, for example, the equipment such as gas pipes, valves, wires, and the like, which are potentially explosive but do not require a power supply, into the special items and may enable an inspection to be performed.

To perform an inspection by distinguishing the common items and the special items through the intensive management module 54 may enable to perform more detailed inspection of equipment within each LOT size grouped in the LOT size determination module 51b.

That is, a plurality of equipment grouped by LOT size may be grouped into one LOT size when the commonality exceeds 60% as described above, so each equipment may be provided with different devices depending on the differences (provided with different types of equipment that may or may not require a power supply). Accordingly, the equipment that is grouped in one LOT size, but has motors, barrels, and the like that other equipment does not have, may be selected as the special items to perform an inspection, thereby preventing the inspection of the equipment corresponding to the special items that need to be inspected from being omitted when performing the inspection.

The hazard area setting unit 60 may perform a function of determining the level and range of the hazardous area of an explosion in a combustible gas and dust environment, and may determine a dilution level, determine a level of the explosion-proof area, and output the distance of the hazardous area through the output unit 20.

First, the location where combustible gas is used and the source of leakage within the explosion hazard area may be identified, and the amount of gas leaked from the leakage area may be detected.

Afterwards, the ventilation information for a specific area may be classified into an outdoor and an indoor, and as a result of the classification, the ventilation speed (ventilation performance) may be determined.

At this time, in the case of a specific area determined as the outdoor, the specified ventilation speed value may be output, and in the case of a specific area determined as the indoor, the ventilation speed may be determined after distinguishing natural ventilation and forced ventilation.

Accordingly, the dilution level may be determined on the basis of the ventilation speed determined in the specific area, and the distance of the hazardous area may be calculated after confirming the level of the explosion-proof area, and may be output through the output unit 20.

Accordingly, the user may be provided with a level in the combustible gas and dust environment and a range according to the distance of the hazardous area through the terminal 100 to enable customized ventilation for the corresponding specific area, and may be provided with a range information within the hazardous area.

When installing equipment in an explosion-proof area, the installation design support unit 70 may perform a function of supporting the installation of the equipment to be properly performed.

At this time, it may be preferable that the information on the equipment to be installed in the explosion hazard area is registered in the database management unit 30, and furthermore, an individual ID may be assigned to each equipment, and a cable connection information may be stored together.

This may enable the user to determine whether the corresponding equipment can be installed in a specific explosion hazard area or whether the occurrence rate of a safety accident is high or low by outputting the electricity and communication circuit diagram of the equipment together when the user browses the ID of the equipment through the terminal 100.

In detail, the equipment may be installed correctly on the basis of various information such as the level of the hazardous area of an explosion in a specific area determined by the hazard area setting unit 60, the gas group, and the temperature level.

Herein, the gas group may mean identifying the characteristics of the gas expected to be present where the equipment will be installed and as a result of that, ensuring that the equipment is correctly installed.

In other words, gas groups may group gases having similar characteristics together in consideration of the characteristics of each gas since there are many different types of gases, and this may be based on the IEC classification standard.

In addition, the temperature level may refer to the temperature at which the target starts to ignite.

The on-site installation support unit 80 may perform a function of supporting the on-site installation of explosion-proof equipment.

This may enable real-time checks to be performed in order to ensure that the corresponding equipment is properly installed when installing an actual equipment along with the installation design support unit 70.

At this time, the customized information according to the ID of the equipment selected through the terminal 100 may be provided in order to ensure that the installation is performed in compliance with electrical safety standards, construction regulations, explosion-proof regulations, and the like as consideration items.

That is, when the user is to install equipment in an explosion hazard area, the installation may be performed by receiving information through the on-site installation support unit 80, thereby making a real-time inspection possible.

At this time, the user may register and inspect the installed equipment from the RFID tag using the terminal 100, and accordingly output an installation report, in order to determine whether or not there is omission according to an ID or information confirmation of the actual equipment or whether the equipment is properly installed.

In addition, when the cable information of the installed equipment is input, the appropriateness may be determined by comparing the information provided by the installation design support unit 70.

The approval unit 90 may enable approval from the smart system 200 to be performed when various tasks are performed by a user holding the terminal 100 in the field, and may have a function for installing the equipment or permitting an inspection.

Explaining with reference to FIG. 2, the approval unit 90 may enable the process of installing, inspecting, maintaining or repairing equipment to be implemented only when the approval of the smart system 200 is obtained and be configured to notify of when the work is performed without approval.

That is, the omission of information updates may occur when various tasks are performed without approval, and safety accidents may easily occur when the history of the actual equipment is different from the history information of data, so to prevent this, the work may be performed only when an approval is obtained from the smart system 200 before the work.

For example, the work may be approved by notifying the user through the terminal 100 after identifying the inspection cycle of the relevant equipment and then determining whether the equipment falls within the inspection cycle in order to approve the work.

According to design conditions, the approval unit 90 may perform an approval for starting the work before the user starts the work, and when the work is completed, the approval may be performed once again so that the data on the start time, end time, and content of the user's work is properly updated.

According to this configuration, the smart platform for explosion-proof inspection in industrial sites according to the present disclosure may prevent safety accidents in advance through the prevention of information omission according to history management, inspection cycle management, and updates by collecting data such as equipment information and information on specific locations exposed to explosion risks, such as power generation facilities, gas, petrochemical, offshore plants, etc. and notifying of the same in reports.

In addition, it may be efficient in shortening the inspection time and preventing safety accidents by performing a sample inspection rather than a full inspection through the sampling inspection.

In addition, it may be possible to minimize revisits to locations where the inspection is completed by providing a route for the inspection, and to minimize inspection omissions and increase the efficiency of the inspection while moving the optimal route by inducing the visits to locations where the inspection is not performed.

In addition, the level of the explosion-proof area may be determined, and the distance of the hazardous area may be outputted and notified to specify the explosion hazard area by determining the level and range of the explosion-proof area in a combustible gas and dust environment.

In addition, there may be the advantage of determining the appropriateness of the equipment to be installed in the explosion-proof area by setting the explosion-proof level of the equipment installed in the explosion-proof area and by performing the installation procedure while comparing the installation regulations at the site.

Although various exemplary embodiments of the present disclosure have been suggested and described in the above description, the present disclosure may not be necessarily limited thereto, and it may be understood by those skilled in the art that various substitutions, modifications, and changes may be made without departing from the technical idea of the present disclosure.

## Claims

1. A smart platform for an explosion-proof inspection in an industrial site in order to prevent explosion hazard of all equipment, the platform comprising:
a terminal (100) capable of wireless communication and capable of inputting and outputting information according to the explosion-proof inspection, and
a smart system (200) capable of processing and transmitting information according to the explosion-proof inspection in communication with the terminal (100),
wherein the smart system (200) comprises
an interface unit (10) that receives information inputted through the terminal (100) according to the explosion-proof inspection,
an output unit (20) that processes information inputted from the interface unit (10) and outputs the same to the terminal (100),
a database management unit (30) that stores information necessary to perform the explosion-proof inspection,
a controller (40) that controls a flow of data between the terminal (100) and the smart system (200),
an inspection unit (50) that enables the inspection of the equipment to be performed,
a hazard area setting unit (60) that determines a level and range of a hazardous area of an explosion,
an installation design support unit (70) that enables an installation of the equipment on the basis of an ID of the equipment registered in the database management unit (30), the level of the hazardous area of the explosion determined in the hazard area setting unit (60), a gas group, and a temperature level,
an on-site installation support unit (80) that determines a appropriateness by comparing results outputted from the installation design support unit (70) with information on installed equipment, and
an approval unit (90) for an equipment installation or an inspection permission.

2. The platform of claim 1, wherein the inspection unit (50) comprises a sampling specifying module (51) that performs a sample inspection of a specific equipment selected from all equipment,
wherein the sampling specifying module (51) comprises
an equipment history management module (51a) that sets equipment information and a basic inspection cycle,
a LOT size determination module (51b) that groups specific equipment having a same condition among all equipment into a plurality of a LOT size,
a safety level setting module (51c) that determines an acceptance safety level (ASL) for the equipment of each LOT size grouped in the LOT size determination module (51b),
a rejection criterion level setting module (51d) that sets a rejection criterion for the equipment of each LOT size grouped in the LOT size determination module (51b),
an ignition risk calculation module (51e) that calculates a level of an ignition risk for the equipment of each LOT size grouped in the LOT size determination module (51b), and
a diagnosis module (51f) that compares and diagnoses the level of the ignition risk of the LOT size calculated in the ignition risk calculation module (51e) with the rejection criterion value of the LOT size set in the rejection criterion level setting module (51d).

3. The platform of claim 2, wherein the sampling specifying module (51) further comprises an inspection determination module (51g) that performs a sample inspection of a remaining equipment excluding the equipment having a common failure factor among a plurality of equipment grouped in the LOT size when determined to be a common failure factor of the equipment and conversely performs a full inspection of the entirety of the one or more LOT sizes when determined to be not a common failure factor, when the level of the ignition risk is greater than the rejection criterion value as a result of comparison in the diagnosis module (51f).

4. The platform of claim 3, wherein the inspection determination module (51g) performs an additional inspection of another LOT size other than the LOT size in which the equipment having the failure factor is grouped, when the level of the ignition risk is less than the rejection criterion value as a result of the comparison in the diagnosis module (51f).

5. The platform of claim 4, wherein the sampling specifying module (51) comprises an inspection frequency setting module (51h) that classifies into three stages the equipment of the LOT size where the sampling inspection or the full inspection is performed in the inspection determination module (51g) according to the level of the ignition risk and sets an inspection cycle according to each stage.

6. The platform of claim 2, wherein the inspection unit (50) comprises an inspection route setting module (52) that determines a location information and equipment information for each of a plurality of LOT sizes grouped in the LOT size determination module (51b), and a priority route for accessing a plurality of equipment belonging to each LOT size.

7. The platform of claim 6, wherein the inspection unit (50) comprises a location specifying module (53) that distinguishes and determines a route on which an inspection is completed and a route on which an inspection is not performed through a video image photographed by a wearable camera that is integrated with or separate from the terminal (100).

8. The platform of claim 7, wherein the location specifying module (53) notifies of a danger signal through the output unit (20) of the terminal (100) when an accident such as a heavy object fall, a crane malfunction, or a fire occurs through the wearable camera.

9. The platform of claim 7, wherein the location specifying module (53) determines whether the inspection of the LOT size where the specific equipment or a plurality of common equipment is grouped is completed from the video image photographed through the wearable camera and notifies of the same through the output unit (20) when an inspection completion record of the LOT size where a specific equipment or a plurality of common equipment inputted from the interface unit (10) is grouped is inputted.

10. The platform of claim 1, wherein the inspection unit (50) comprises an intensive management module (54) that distinguishes a common item and a special item that are provided in a plurality of equipment to perform an inspection, wherein the common item in the intensive management module (54) is a common management item that is provided in all equipment, such as the tightness force of a bolt or the loss of a bolt, and
the special item is a special management item that is provided in only some equipment of all equipment, such as a motor or a battery.

11. The platform of claim 10, wherein the intensive management module (54) classifies a level according to a safety level into a total of 9 levels, ranging from safe to hazardous, and notifies of when the level drops for three consecutive times according to an inspection result through the output unit (20) regardless of a current level.

12. The platform of claim 1, wherein the output unit (20) updates information on the equipment where the inspection is completed and outputs the same as a report, marking one or more classification symbols of an explosion-proof structure (EX) for each specific equipment or each LOT size while marking in alphabetical order when multiple classification symbols of the explosion-proof structure (EX) are present.
